(19) Europäisches Patentamt
European Patent Office
Office européen des brevets

(11) **EP 3 670 467 A1**

(12) # EUROPEAN PATENT APPLICATION

(43) Date of publication:
**24.06.2020  Bulletin 2020/26**

(21) Application number: **18306825.3**

(22) Date of filing: **21.12.2018**

(51) Int Cl.:
*C04B 7/26* (2006.01)          *C04B 7/345* (2006.01)
*C04B 7/43* (2006.01)          *C04B 7/47* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Holcim Technology Ltd
8645 Jona (CH)**

(72) Inventors:
• **PISCH, Alexander
  5113 Holderbank (CH)**
• **FEREY, Frédérique
  5113 Holderbank (CH)**

(74) Representative: **Regimbeau
20, rue de Chazelles
75847 Paris Cedex 17 (FR)**

(54) **VERSATILE METHOD FOR PREPARING CARBONATABLE CLINKER MATERIALS**

(57)    The invention concerns a carbonatable clinker material comprising at least 60 wt.% of amorphous phase, advantageously at least 80 wt.% of amorphous phase, more advantageously at least 99 wt.% of amorphous phase, more advantageously 100 wt.% of amorphous phase, compared to the total weight of the carbonatable clinker material, wherein said material has the following oxide composition:
- calcium oxide, magnesium oxide, sodium oxide, potassium oxide and silicon dioxide are present in molar amounts such that $(CaO + MgO + Na_2O + K_2O)/SiO_2$ ranges between 0.7 and 1.8, preferentially from 0.9 to 1.6;
- total soluble alkali ranges between 0.01 and 0.06 wt.% of the amount of carbonatable clinker material.

Printed by Jouve, 75001 PARIS (FR)

**Description**

**FIELD OF THE INVENTION**

The invention generally relates to a method for preparing a carbonatable clinker material by melting a raw mix, to carbonatable clinkers and carbonatable binders obtained thereof.

**STATE OF THE ART**

Cements enable the manufacture of building materials such as mortar, concrete or stucco, in which they act as the 'glue' that gives strength to structures. Mortar is a mixture of cement and sand whereas concrete also includes coarse aggregates. These aggregates can be made out of lots of different materials, but the vast majority of aggregate is just sand, gravel, and rocks, which are cheap, plentiful, and easily obtained from nature. Cement, on the other hand, is a man-made material that requires energy-intensive steps and causes large greenhouse gases emissions.

Portland cement is the most common type of cement in general use around the world. The first step in the manufacture of Portland cement is to combine a variety of raw ingredients so that the resulting cement will have the desired chemical composition. These components are ground, blended, and then the resulting raw mix is fed into a cement kiln to produce clinker. The production of Portland cement requires temperatures of about 1450°C and is typically accomplished by using a rotary kiln. Rotary kilns comprise a long cylindrical kiln that slopes downward and rotates slowly. The raw mix enters at the upper end of the rotary kiln and slowly works its way downward over a period of 20-90 minutes, undergoing several different reactions. The final stage in the manufacturing process involves crushing and grinding the clinker into a fine powder. In the case of Portland cement, a source of calcium sulphate such as gypsum is added. Also, other mineral components may be blended with cement, such as ground limestone, ground granulated blast furnace slag, fly ash, or pozzolans. Beyond Portland-type cements, there are also special cements to serve special construction need, such as calcium aluminate cements. These cements contain between about 40% to 80% per cent weight of $Al_2O_3$, which is much more than in Portland-type cements. These cements have unique properties such as rapid strength development, high temperature resistance or refractory performance which make them the material of choice in specialist applications where the performance of Portland cement is insufficient. Such cements are produced not by reactive sintering but by complete melting of adequate raw mixes in melting kilns at temperature of about 1450-1600°C, the resultant product being ground to a fine powder. In particular, the clinker for Ciment Fondu®, the world's first commercially manufactured calcium aluminate cement and still frequently encountered, is prepared in a production facility using a reverberatory furnace in which the raw materials are melted to form the clinker.

The energy required to manufacture cement results in very high amounts of $CO_2$ released in the atmosphere. For example, the overall carbon footprint of a typical Portland cement that does not contain other mineral components is about comprised between 800 and 900 kg of $CO_2$ per ton of cement produced.

One approach to limit the overall release of considerable quantities of greenhouse gas ($CO_2$) is the development of cements which develop strength by reaction with $CO_2$ (carbonatable) instead of water (hydraulic). The overall $CO_2$ balance becomes more favourable due to the consumption of $CO_2$ during the hardening process which counterbalances the $CO_2$ release during production. Indeed, it has been shown that binders made from calcium silicates such as the mineral wollastonite can carbonate rapidly in relatively pure $CO_2$ gas at atmospheric pressure.

The clinker of such carbonatable materials is typically manufactured in rotary kilns from the same raw materials as Portland cement but formulated in different proportions.

For example, US20160031757 teaches preparation methods of carbonatable calcium silicate clinker. In particular, it describes the manufacturing of carbonatable clinker materials using a rotary kiln, wherein raw mixes are fired at temperatures ranging 1050°C to 1250°C ([0075] to [0079]). Interestingly, this document also describes the manufacturing of carbonatable materials using a melting furnace, in which raw mixes constituted of chemical grade $SiO_2$, $CaCO_3$ and $Al_2O_3$ are brought to 1600°C [0087]. However, the fusion temperature of such raw mixes is high and therefore has the disadvantage of having a high $CO_2$ footprint.

**DESCRIPTION**

An aim of the present invention is to provide an optimized method for preparing a carbonatable clinker material in a melting kiln, wherein said method is carried out at temperatures below 1600°C.

A clear advantage of this method is that it requires less energy, thereby lowering $CO_2$ emissions and decreasing operating costs of cement plants using melting kilns. Thus, the present invention facilitates the manufacture of carbonatable clinker material in areas where there are no plant cements with a standard rotary kiln.

Another significant advantage of the method of the invention is its versatility as it can also be carried out in a standard cement plant, because the clinkerisation temperature of the method of the invention is in the range of the normal operating temperature of a cement rotary kiln.

Moreover, the raw mixes used in the method of the invention may contain higher content of MgO than the one used in standard carbonatable clinker manufacture. The associated advantage is that the method of the invention allows to use raw materials which are generally avoided in the Portland clinker production such as dolomite, and thus allows a better use of quarry resources as well as the use of alternative raw materials such as kiln dust.

Another aim of the invention is to supply a novel carbonatable clinker material, and carbonatable binder, concrete or mortar obtained thereof.

These aims are achieved by the invention, which will be described below.

Definitions

In cement industry, a specific cement chemist notation is used, whose correspondence with traditional chemistry notation is provided in the **Table 1** below:

**Table 1**

| Cement chemistry notation | Conventional chemistry notation |
|---|---|
| C | CaO |
| S | $SiO_2$ |
| A | $Al_2O_3$ |
| F | $Fe_2O_3$ |
| T | $TiO_2$ |
| M | MgO |
| K | $K_2O$ |
| N | $Na_2O$ |
| H | $H_2O$ |
| $ | $SO_3$ |
| P | $P_2O_5$ |

The chemical composition of either natural (e.g. raw mix) or synthetic (e.g. clinker) materials may be performed by a well-known method namely X-Ray Fluorescence spectroscopy (XRF). This technique allows to determine both major and minor elements. Prior to oxide analysis by XRF, the material sample is generally submitted to calcination (e.g. ignited at 950°C for 45 minutes) allowing volatile substances to escape, until its mass ceases to change. Loss on ignition (LOI) corresponding to sample mass prior to calcination $m_0$ minus the sample mass after calcination $m_1$ is then determined. The volatile materials lost usually consist of "combined water" (hydrates and labile hydroxy-compounds) and carbon dioxide from carbonates. In the context of the invention and unless otherwise specified, LOI is reported as part of oxide composition without specifying its chemical nature.

Clinker and cements contain oxides of the alkali metals sodium and potassium. In the cement industry, it is customary to combine these together and express the result as the "alkali content" of the cement or clinker. However, to do this it is not possible simply to add the sodium oxide ($Na_2O$) content and the potassium oxide ($K_2O$) content together because of the different relative molecular masses of the two oxides ($Na_2O$=62.0 and $K_2O$=94.2). Instead a concept known as "$Na_2O$ equivalent" is calculated using the expression:

$$Na_2O \text{ equivalent (wt.\%)} = Na_2O \text{ (wt.\%)} + (62.0/94.2) \times K_2O \text{ (wt.\%))}$$

$$= Na_2O \text{ (wt.\%)} + 0.658 \times K_2O \text{ (wt.\%))}$$

In particular, the alkali content of a clinker or cement can be expressed as "total soluble alkali" as detailed below.

The chemical composition of the raw mix may be defined with its oxide composition, meaning that the raw mix chemical composition is defined by giving the oxide composition that the raw mix will comprise after calcination. For example, calcium carbonates and calcium and magnesium carbonates are respectively calcium oxide and magnesium oxide precursors as they are contained in the raw materials and are completely dissociated at temperatures between 500-900°C, as per following reactions:

$$CaCO_3 \rightarrow CaO + CO_2$$

$$MgCO_3 \rightarrow MgO + CO_2$$

$$MgCa(CO_3)_2 \rightarrow CaCO_3 + MgO + CO_2 \rightarrow CaO + MgO + 2CO_2$$

Indeed, it is well known in the prior knowledge that whatever the clinkerisation process, the amount of matter entering the process (i.e. raw mix injected in the kiln in form of powder or slurry) is equal to the amount of matter leaving the process (i.e. clinker material and if so dusts, vapor and fumes released by the kiln). As dusts, vapor and fumes are generally negligible it is well known that the oxide composition of the clinker material is a fair estimate of the calcined raw mix (i.e. raw mix after calcination) oxide composition. Moreover, it is well-known that a person skilled in the art may easily, given the oxide composition of a calcined raw mix and the chemical composition of the different raw materials at his disposal, calculate the adequate composition of raw mixes allowing to obtain the desired clinker material.
Unless stated otherwise, all the percentages are expressed as weight percentages (wt.%).

*Carbonatable clinker material*

A first object of the invention is a carbonatable clinker material comprising at least 60 wt.% of amorphous phase, advantageously at least 80 wt.% of amorphous phase, more advantageously at least 99 wt.% of amorphous phase, more advantageously 100 wt.% of amorphous phase, compared to the total weight of the carbonatable clinker material, wherein said material has the following oxide composition:

- calcium oxide, magnesium oxide, sodium oxide, potassium oxide and silicon dioxide are present in molar amounts such that $(CaO + MgO + Na_2O + K_2O)/SiO_2$ ranges between 0.7 and 1.8, preferentially from 0.9 to 1.6;
- total soluble alkali ranges between 0.01 and 0.06 wt.% of the amount of carbonatable clinker material.

Several techniques are available to the skilled person for determining the clinker total soluble alkali. In a preferred embodiment, the total soluble alkali is measured using the following method:

a) clinker material is ground until reaching a Blaine fineness of 5000 +/- 100 $cm^2/g$.
b) a 2.000 g sample of the ground carbonatable clinker of step a) is weighed in 100 mL of deionized water;
c) the mixture is stirred with a magnetic stirrer for 15 minutes
d) The mixture of step c) is filtered to remove all solid particles
e) 20 mL of hydrochloric acid dilated at 1/20 are added,
f) Soluble sodium oxide $(Na_2O)_{SOL}$ and potassium oxide $(K_2O)_{SOL}$ contents are measured by flame atomic absorption spectroscopy
g) Total soluble alkali $(Na_2O_{eq.})_{SOL}$ is then calculated according to the formula:

$$(Na_2O_{eq.})_{SOL} \, (wt.\%) = (Na_2O)_{SOL} \, (wt.\%) + (0.658 \times (K_2O)_{SOL} \, (wt.\%)).$$

In the present invention, the oxides may be contained in the amorphous phase of the clinker, or in its crystalline phase, or distributed in both types of fractions.
The molar amounts of CaO, MgO, $Na_2O$, $K_2O$, $SiO_2$ used to determine the $(CaO + MgO + Na_2O + K_2O)/SiO_2$ molar ratio may be obtained using the chemical composition of the clinker material as measured by X-Ray Fluorescence.
Advantageously, the carbonatable clinker material comprises from 35 to 50 wt.% of CaO, more advantageously 40 to 48 wt.% of CaO, relative to the total weight of clinker.
Advantageously, the carbonatable clinker material comprises from 1 to 15 wt.% of MgO, more advantageously 1.5 to 10 wt.% of MgO, relative to the total weight of clinker.
Advantageously, the carbonatable clinker material comprises from 0.1 to 5.0 wt.% of $Na_2O$, more advantageously 0.2 to 3.5 wt.% of $Na_2O$, relative to the total weight of clinker.
Advantageously, the carbonatable clinker material comprises from 0.1 to 5.0 wt.% of $K_2O$, more advantageously 0.2 to 3.5 wt.% of $K_2O$, relative to the total weight of clinker.
Advantageously, the carbonatable clinker material comprises from 0.2 to 5.0 wt.% of $Na_2O_{eq.}$, more advantageously 0.5 to 4.0 wt.% of $Na_2O_{eq.}$, relative to the total weight of clinker.
Advantageously, the carbonatable clinker material from 35 to 50 wt.% of silicon oxide $SiO_2$, advantageously

37 to 48 wt.% of $SiO_2$, relative to the total weight of clinker.

In an embodiment, the clinker material of the invention comprises at least at least 60 wt.%, advantageously at least 80 wt.%, more advantageously at least 99 wt.% of amorphous phase, more advantageously 100 wt.%, compared to the total weight of the carbonatable clinker material, wherein the clinker material comprises, relative to the total weight of clinker:

- from 35 to 50 wt.%. of CaO, advantageously 40 to 48 wt.% of CaO;
- from 1 to 15 wt.% of MgO, advantageously 1.5 to 10 wt.% of MgO;
- from 0.1 to 5.0 wt.% of $Na_2O$, advantageously 0.2 to 3.5 wt.% of $Na_2O$;
- from 0.1 to 5.0 wt.% of $K_2O$, advantageously 0.2 to 3.5 wt.% of $K_2O$;
- from 35 to 50 wt.% of $SiO_2$, advantageously 37 to 48 wt.% of $SiO_2$.

In an embodiment, the clinker material of the invention comprises at least at least 60 wt.%, advantageously at least 80 wt.%, more advantageously at least 99 wt.% of amorphous phase, more advantageously 100 wt.%, compared to the total weight of the carbonatable clinker material, wherein the clinker material comprises, relative to the total weight of clinker:

- from 35 to 50 wt.%. of CaO, advantageously 40 to 48 wt.% of CaO;
- from 1 to 15 wt.% of MgO, advantageously 1.5 to 10 wt.% of MgO;
- from 0.1 to 5.0 wt.% of $Na_2O$, advantageously 0.2 to 3.5 wt.% of $Na_2O$;
- from 0.1 to 5.0 wt.% of $K_2O$, advantageously 0.2 to 3.5 wt.% of $K_2O$;
- from 0.2 to 5.0 wt.% of $Na_2O_{eq.XRF}$, advantageously 0.5 to 4.0 wt.% of $Na_2O_{eq\,XRF}$.;
- from 35 to 50 wt.% of $SiO_2$, advantageously 37 to 48 wt.% of $SiO_2$;

wherein calcium oxide content, magnesium oxide content, potassium oxide, sodium oxide content, and silicon dioxide content in the clinker, each expressed in moles, are such that the molar ratio $(CaO + MgO + Na_2O + K_2O)/SiO_2$ in the clinker ranges from 0.7 to 1.8, more preferentially from 0.9 to 1.6.

Preferably, the $Na_2O_{eq\,XRF}$ may be obtained using the $Na_2O$ and $K_2O$ of the clinker material as measured by X-Ray Fluorescence on the ground clinker as detailed above, $Na_2O_{eq\,XRF}$ being calculated using the formula $Na_2O_{eq\,XRF}$ (wt.%) = $Na_2O_{XRF}$ (wt.%) + 0.658 x $K_2O_{XRF}$ (wt.%).

According to an advantageous embodiment of the invention, the carbonatable clinker material is in the form of a powder, preferably a powder having a Blaine specific surface area of about 3000 to 7000 $cm^2/g$, more preferentially of about 4000 to 6000 $cm^2/g$.

According to an advantageous embodiment of the invention, the clinker material is suitable for carbonation with $CO_2$ at a temperature of about 20°C to 90°C. In such conditions, the clinker material forms carbonates, preferably $CaCO_3$, with a mass gain of about 20% or more. The mass gain reflects the net sequestration of $CO_2$ in the carbonated products. In advantageous embodiments, the clinker material is suitable for carbonation with $CO_2$ at a temperature of 20°C to 90°C (e.g. 40°C to 90°C, 50°C to 90°C, 60°C to 90°C, 30°C to 80°C; 30°C to 70°C, 20°C to 60°C, 20°C to 50°C) to form carbonates with a mass gain of 10% or more (e.g. 15% or more, 20% or more, 25% or more, 30% or more).

As seen above, the ground clinker material has a low amount of soluble alkali. Without wishing to be bound by any theory, the Applicant believes that the alkali are mostly within the amorphous phases and are therefore insoluble, with the advantage of preventing their possible leaching from the binder and/or concretes of the invention.

The clinker material as defined below may be used as a carbonatable binder.

The clinker may also comprise from 0.1 to 10 wt.% of minor and trace elements such as $Fe_2O_3$, $Al_2O_3$, $TiO_2$, F, Cl, $P_2O_5$, $B_2O_3$, BaO, or $SO_3$.

*Method for preparing carbonatable clinker material*

A second object of the invention is a method for preparing a carbonatable according to the first object of the invention comprising:

i) heating a raw mix at a temperature $T_m$ sufficient for said raw mix to be completely in a molten state for a time period making it possible to achieve the complete melting of the raw composition;
ii) cooling the molten mixture down obtained at end of step i).

Step (i)

In the sense of the present invention, the term "$T_m$ sufficient for said raw mix to be completely in a molten state"

means that temperature $T_m$ must be sufficient or equal to the melting point $T_{fm}$ of said raw mix.

Advantageously, step i) may be carried out at temperature $T_m$ equal or superior to 1250°C and strictly inferior to 1600°C.

Advantageously, step i) may be carried out at temperature $T_m$ ranging from 1250°C to 1500°C, advantageously from 1300°C to 1500°C, more advantageously from 1350°C to 1450°C.

The time required to completely melt the raw mix varies with the type and size of the kiln.

Step (ii)

Advantageously, the cooling down of step ii) comprises suddenly lowering the temperature of the molten mixture obtained at end of step i) at a temperature below the crystallization temperature.

Advantageously, the cooling down of step ii) is carried out by air or water quenching the molten mixture, preferably is carried out by air quenching the molten mixture.

Step (iii)

The method may further comprise a step iii) after step ii), of grinding the clinker material obtained at the end of step ii) according to the invention.

Type of furnace

Step i) may be carried out in a melting furnace, preferably a melting furnace habitually used for melting a metal such as a crucible furnace, a cupola furnace, an induction furnace, shaft kiln, arc melting furnace or a reverberatory furnace.

Preferably, step i) is carried out in a reverberatory furnace. A reverberatory furnace has for example a L-section, that is to say a vertical part and a horizontal part which communicate with each other. The vertical part may reach as high as several meters. Generally, raw materials are introduced into the melting furnace through an aperture located on the upper portion of the vertical part. These raw materials, advantageously in the form of blocs, are loaded into the furnace so as to fully occupy the volume of this vertical part and they thus form, at a junction between horizontal part and vertical part, a slope-shaped pile of raw materials. The latter is then attacked by a flame located in the furnace horizontal part, in front of the slope-shaped pile. The solid material may be heated at a temperature above 1250°C, 1300°C, 1350°C, or even above 1450° C up to 1600°C. It thus brings the required thermal energy so as to make raw materials melt, thus forming a material liquid bath. The raw material temperature in the furnace typically reaches up to 1250°C, 1300°C, 1350°C, 1450°C. The materials, once melted, are discharged through a tap hole located in the horizontal part of the furnace. During the process, combustion gases develop and go a counter-current path as compared to the raw materials. They are then discharged through a gas stack located in the upper portion of the furnace vertical part. These gases, with a temperature of about 1500°C, thus circulate between the blocks above the slope-shaped pile and pre-heat the blocks through the transfer of heat. The raw materials, from the moment when they are introduced to the contact with the flame, thus undergo beforehand a drying process, then a dehydration and a decarbonation mediated by the combustion gases going up the vertical part of the furnace. The preheating of the raw materials by the combustion gases is made possible due to the porous stacking of the pellets or granules, whose large enough diameter allows the gases to flow through. Thus, the firing of the raw materials sources of at least calcium, silicon, aluminium, magnesium, sodium and potassium alone or together, and iron oxides is effected at a temperature ranging preferably from 1250°C to 1500°C, advantageously from 1300°C to 1500°C, more advantageously from 1350°C to 1450°C, for a time period ranging preferably from 5 to 12 hours, in particular from 6 to 10 hours. At the outlet of the furnace, a clinker material is thus obtained. Advantageously, this clinker is quenched immediately after the firing, so as to reduce the temperature of the clinker to a temperature below the crystallization temperature and to obtain an amorphous clinker.

Alternatively, step i) may also be carried out in a rotary kiln, preferably a rotary kiln habitually used for manufacturing Portland cement.

Raw materials

The method of the invention may further comprise a step $i_0$) before step i), of preparing a raw mix according to the invention, said raw mix being in the solid state (e.g. in the form of granular material).

The step $i_0$) may be carried out by way of separately or simultaneously crushing or milling the source of oxides, and intermixing thereof in the case of separate grinding. Said grinding can be performed either in the presence of water (wet grinding) or without it (dry grinding).

In an embodiment, the raw mix of the invention comprises calcium, silicon, aluminium, iron sodium oxide, potassium oxide, and magnesium oxides or precursors thereof.

According to a preferred embodiment, the raw mix of the invention comprises a $(CaO + MgO + Na_2O + K_2O)/SiO_2$ molar ratio ranging from 0.7 to 1.8, preferentially from 0.9 to 1.6.

As explained, the oxides may be provided in the raw mix by oxide precursors which are natural raw materials typical of the cement industry, such as limestone, marl, sand, dolomite, and clays.

Advantageously, the oxides may also be provided by alternative suited raw materials selected from olivine, wollastonite, rankinite, monticellite, fosterite, serpentinite, talc, feldspar, anorthite, anorthosite, albite, microcline, sanidine, pyroxene, plagioclase, fluorspar and artificial ones which may include recycled concrete fines, asbestos fibres, cement clinker, cement kiln dust, recycled glass, blast furnace slag or steel slag. In an embodiment, the raw mix of the invention advantageously comprises at least a raw material selected from the alternative raw materials defined above, preferably comprises cement kiln dust.

Advantageously, a raw material that contains calcium oxide precursors may be selected among limestone, marl, calcite, aragonite, shale, or sea shells.

Advantageously, a raw material that contains silicon dioxide precursors may be selected among clay, marl, sand, shale, fly ash, rice hull ash, slag, recycled glass or recycled concrete.

Advantageously, a raw material that contains aluminium oxide precursors may be selected among clay, shale, fly ash, red mud or aluminium ore refuse.

Advantageously, a raw material that contains iron oxide precursors may be selected among clay, iron ore, mill scale, shale, or blast furnace dust.

Advantageously, a raw material that contains alkali oxide precursors may be selected among feldspar, albite, sanidine, microcline, plagioclase or recycled glass.

*Carbonatable binder, concrete, mortar, element for construction*

A third object of the invention is a carbonatable binder comprising a clinker material as defined in the second object of the invention.

A fourth object of the invention is a concrete or mortar comprising a carbonatable binder according third object of the invention.

A fifth object of the invention is an element for construction or building comprising a carbonated concrete or mortar according to the fourth object of the invention. Advantageously, the element of the invention does not present efflorescence.

**EXAMPLES**

The raw materials used in the examples are listed below:

- $Al_2O_3$, Rectapur VWR, >99.5%
- $Fe_2O_3$, Alfa Aesar VWR, 99.99%
- MgO, EMSURE Merck, >97%
- $Na_2CO_3$, Normapur, >99.9%
- $K_2CO_3$, Normapur, 99%
- Ground natural sand and limestone were obtained from a cement plant (fineness 10% rejects @ 100$\mu$m)

Unless stated otherwise, all the materials were used as received from the manufacturers.

Unless stated otherwise, all the percentages are expressed as weight percentages.

The materials, prepared or commercial were characterized by:

- X-Ray Fluorescence spectroscopy (XRF) to determine the chemical composition, in particular oxide composition,
- X-Ray Diffraction (XRD) to verify the amorphous nature of the clinkers.

The X-Ray Fluorescence spectroscopy analyses were performed using apparatus sold under the trade name FX Magix PRO, by the company PANanalyticalX.

The X-Ray Diffraction analyses were performed using apparatus sold under the trade name Philips X'Pert Pro, by the company PANanalytical.

The mixing of the raw mix was performed using apparatus under the trade name Turbula 2L type T2C, manufactured by the company Willy A. Bachofen (WAB).

The melting of raw mixes was performed using apparatus sold under the trade name Thermoconcept HTL10/17, manufactured by the company CERADEL.

**Example 1: Preparation of carbonatable clinker material CM1, CM2, CM3, CM4, CM5, CM6 and CM7.**

1.1 Preparation of clinker material CM1, CM2, CM3, CM4, CM5, CM6 and CM7 according to the invention

Ground natural raw materials from a cement plant (natural sand, limestone - fineness 10% rejects @ 100μm) were mixed together with some corrective laboratory pure materials ($Al_2O_3$, $Fe_2O_3$, MgO, $Na_2CO_3$ and $K_2CO_3$) in a Turbula mixer to obtain a homogeneous raw mix. Seven different compositions, varying in MgO and alkali content are produced.

Each of the composition of the seven raw mixes was fed into a melting furnace and burnt up to 100% melting. The burning conditions are summarized in Table 1.

The same method was repeated by changing compositions, varying in MgO and alkali content, giving respectively the clinker materials CM1, CM2, CM3, CM4, CM5, CM6 and CM7.

The clinker material CM1, CM2, CM3, CM4, CM5, CM6 and CM7 emerged in form of a mass of solid glass.

Table 1: Clinkering process conditions for CM1, CM2, CM3, CM4, CM5, CM6 and CM7

| Sample | CM1 | CM2 | CM3 | CM4 | CM5 | CM6 | CM7 |
|---|---|---|---|---|---|---|---|
| Kiln | Static furnace | Static furnace | Static furnace | Static furnace | Static furnace | Static furnace | Static furnace |
| Burning temperature [°C] | 1400 | 1400 | 1400 | 1400 | 1400 | 1400 | 1500 |
| Isothermal holding time [h] | 1 | 1 | 1 | 1 | 1 | 1 | 1 |

The clinker material is then ground with a laboratory closed ball mill capable of grinding up to 1 kg of material until reaching a Blaine fineness of 5000 +/- 100 $cm^2$/g.

1.2 Characterization of obtained clinker material of the invention CM1, CM2, CM3, CM4, CM5, CM6 and CM7

Table 2: Chemical composition of the clinker materials (as measured by X-Ray Fluorescence)

| Sample | CM1 | CM2 | CM2 | CM4 | CM5 | CM6 | CM7 |
|---|---|---|---|---|---|---|---|
| $SiO_2$ (wt.%) | 40.0 | 43.9 | 43.9 | 44.1 | 42.9 | 42.4 | 47.7 |
| $Al_2O_3$ (wt.%) | 3.5 | 1.4 | 1.4 | 2.0 | 6.2 | 4.1 | 2.6 |
| $Fe_2O_3$ (wt.%) | 4.6 | 2.4 | 4.0 | 4.0 | 2.6 | 2.0 | 0.8 |
| CaO (wt.%) | 39.9 | 43.0 | 43.6 | 43.6 | 42.0 | 46.2 | 45.7 |
| MgO (wt.%) | 8.2 | 4.9 | 4.9 | 1.9 | 2.3 | 1.7 | 0.8 |
| $Na_2O$ (wt.%) | 2.5 | 2.9 | 1.3 | 2.8 | 0.2 | 0.3 | 0.4 |
| $K_2O$ (wt.%) | 1.3 | 1.5 | 0.9 | 1.5 | 1.0 | 0.5 | 0.7 |
| $TiO_2$ (wt.%) | 0.1 | 0.1 | 0.1 | 0.1 | 0.2 | 1.0 | 0.2 |
| Loss on ignition (wt.%) | 0.0 | 0.3 | 0.2 | 0.3 | 0.6 | 1.3 | 1.3 |
| $SiO_2$ (molar %) | 39.2 | 42.7 | 43.0 | 44.0 | 44.3 | 42.8 | 47.4 |
| $Al_2O_3$ (molar %) | 2.0 | 0.8 | 0.8 | 1.2 | 3.8 | 2.4 | 1.5 |
| $Fe_2O_3$ (molar %) | 1.7 | 0.9 | 1.5 | 1.5 | 1.0 | 0.8 | 0.3 |
| CaO (molar %) | 42.0 | 44.8 | 45.7 | 46.7 | 46.4 | 50.0 | 48.6 |
| MgO (molar %) | 11.9 | 7.1 | 7.1 | 2.9 | 3.5 | 2.6 | 1.2 |
| $Na_2O$ (molar %) | 2.4 | 2.7 | 1.3 | 2.7 | 0.2 | 0.3 | 0.4 |
| $K_2O$ (molar %) | 0.8 | 0.9 | 0.5 | 1.0 | 0.7 | 0.3 | 0.4 |

(continued)

| Sample | CM1 | CM2 | CM2 | CM4 | CM5 | CM6 | CM7 |
|---|---|---|---|---|---|---|---|
| $TiO_2$ (molar %) | 0.0 | 0.1 | 0.1 | 0.1 | 0.2 | 0.8 | 0.1 |
| $(CaO + MgO + Na_2O + K_2O)/SiO_2$ molar ratio | 1.46 | 1.30 | 1.27 | 1.21 | 1.15 | 1.24 | 1.07 |

Table 2 shows the chemical composition of clinkers CM1, CM2, CM3, CM4, CM5, CM6 and CM7 according to the invention as determined by X-Ray Fluorescence spectroscopy.

**Table 3:** Quantification of amorphous content in the clinker materials (as measured by X-Ray Diffraction).

| Sample | CM1 | CM2 | CM3 | CM4 | CM5 | CM6 | CM7 |
|---|---|---|---|---|---|---|---|
| Amorphous content (wt.%) | 93.5 | 100 | 100 | 100 | 100 | 100 | 100 |
| Crystalline content (wt.%) | 6.5 (Merwinite) | 0 | 0 | 0 | 0 | 0 | 0 |

Table 3 lists X-Ray Diffraction (XRD) quantification of mineralogical phases present in ground clinker material CM1, CM2, CM3, CM4, CM5, CM6 and CM7.

Table 3 shows firstly that the clinker materials of the invention CM1 comprises an amorphous phase as well as a crystalline merwinite phase, whereas CM2, CM3, CM4, CM5, CM6 and CM7 are exclusively amorphous.

1.3 Soluble alkali of the ground carbonatable clinker

The total soluble alkalis $(Na_2O_{eq.})_{SOL}$ of the ground carbonatable clinker are expressed in weight percentage of the amount of clinker and are measured according the following laboratory protocol:

- 2.000 g of the ground carbonatable clinker is weighed in 100 mL of deionized water;
- The mixture is stirred with a magnetic stirrer for 15 minutes
- The mixture is filtered to remove all solid particles before analysis.
- 20 mL of hydrochloric acid dilated at 1/20 are added.

Soluble sodium oxide $(Na_2O)_{SOL}$ and potassium oxide $(K_2O)_{SOL}$ contents are then measured by flame absorption spectroscopy in the solution obtained as described above. Total soluble alkalis $(Na_2O_{eq.})_{SOL}$ is then calculated according to the formula:

$$(Na_2O_{eq.})_{SOL} \ (wt.\%) = (Na_2O)_{SOL} \ (wt.\%) + (0.658 \ x \ (K_2O)_{SOL} \ (wt.\%))$$

**Table 4:** soluble alkali in the different clinker materials

| Sample | CM1 | CM2 | CM3 | CM4 | CM5 | CM6 | CM7 |
|---|---|---|---|---|---|---|---|
| Soluble alkali $(Na_2O_{eq.})_{SOL}$ | 0.02 | 0.04 | 0.02 | 0.06 | 0.03 | 0.03 | 0.03 |

1.4 Preparation of Mortar Mo1, Mo2, Mo3, Mo4, Mo5, Mo6, Mo7 using clinker material CM1, CM2, CM3, CM4, CM5, CM6 and CM7 according to the invention.

Samples of the ground clinker material CM1, CM2, CM3, CM4, CM5, CM6 and CM7 were mixed with sand to obtain corresponding mortars Mo1, Mo2, Mo3, Mo4, Mo5, Mo6 and Mo7.

Such mortar compositions were then subjected to a $CO_2$ curing regime in a custom-made reactor. The samples were carbonated at 60°C under a stirred $CO_2$ atmosphere partially saturated with water.

**Table 5:** Carbonation results for paste samples (24h @ 60°C, initial W/C=0.3)

| Sample | Mo1 | Mo2 | Mo3 | Mo4 | Mo5 | Mo6 | Mo7 |
|---|---|---|---|---|---|---|---|
| mass gain [%] | 16.0 | 17.4 | 16.0 | 13.6 | 9.6 | 20.6 | 15.4 |

(continued)

| Sample | Mo1 | Mo2 | Mo3 | Mo4 | Mo5 | Mo6 | Mo7 |
|---|---|---|---|---|---|---|---|
| residual water [%] | 3.4 | 4.2 | 5.9 | 7.1 | 5.9 | 1.6 | 1.6 |
| %$CO_2$ | 13.6 | 15.9 | 12.2 | 12.2 | 7.1 | 16 | 12.1 |
| %$H_2O$ | 4.1 | 4.3 | 4.0 | 3.4 | 2.6 | 5.6 | 3.8 |
| Rc (MPa) | ND | 33.4 | ND | ND | 26.7 | ND | 52.4 |

## Claims

1. A carbonatable clinker material comprising at least 60 wt.% of amorphous phase, advantageously at least 80 wt.% of amorphous phase, more advantageously at least 99 wt.% of amorphous phase, more advantageously 100 wt.% of amorphous phase, compared to the total weight of the carbonatable clinker material, wherein said material has the following oxide composition:

   - calcium oxide, magnesium oxide, sodium oxide, potassium oxide and silicon dioxide are present in molar amounts such that (CaO + MgO + $Na_2O$ + $K_2O$)/$SiO_2$ ranges between 0.7 and 1.8, preferentially from 0.9 to 1.6;
   - total soluble alkali ranges between 0.01 and 0.06 wt.% of the amount of carbonatable clinker material.

2. The carbonatable clinker material according to claim **1** wherein the clinker material is in the form of a powder, preferably a powder having a Blaine surface comprised between 3000 and 7000 $cm^2$/g.

3. A method for preparing carbonatable clinker material as defined in any of claims **1** to **2**, said method comprising:

   i) heating a raw mix at a temperature $T_m$ sufficient for said raw mix to be completely in a molten state for a time period making it possible to achieve the complete melting of the raw composition;
   ii) cooling down the molten mixture obtained at end of step i).

4. The method according to claim **3,** wherein the temperature $T_m$ of step i) is equal or superior to 1250°C and strictly inferior to 1600°C, preferably said temperature $T_m$ ranges from 1300°C to 1500°C, more preferably ranges from 1350°C to 1450°C.

5. The method according to any of claims **3** to **4** wherein step i) is carried out in a melting furnace, preferably a reverberatory furnace.

6. The method according to any of claims **3** to **5** wherein step i) is carried out in a rotary kiln.

7. The method according to any of the claims **3** to **6,** wherein the cooling down of step ii) comprises suddenly lowering the temperature of the molten mixture obtained at end of step ii) at a temperature below the crystallization temperature.

8. The method according to any of claims **3** to **7** further comprising a step iii) of grinding the mixture obtained at the end of step ii), preferably until obtaining a powder having a Blaine specific surface area of about 3000 to 7000 $cm^2$/g, more preferentially of about 4000 to 6000 $cm^2$/g.

9. The method according to any of the claims **3** to **8** wherein the raw mix comprises raw materials selected among limestone, marl, sand, dolomite, clays, olivine, monticellite, wollastonite, rankinite, fosterite, serpentine, talc, feldspar, anorthite, anorthosite, albite, microcline, sanidine, pyroxene, plagioclase, fluorspar, recycled concrete fines, asbestos fibres, cement clinker, blast furnace or steel slag.

10. A carbonatable binder comprising a carbonatable clinker material according to any of the claims **1** or **2**.

11. A concrete or mortar comprising a carbonatable binder according to claim **10**.

Europäisches
Patentamt

European
Patent Office

Office européen
des brevets

## EUROPEAN SEARCH REPORT

Application Number

EP 18 30 6825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/118030 A1 (CIMPOR CIMENTOS DE PORTUGAL SGPS S A [PT]; INST SUPERIOR TÉCNICO [PT]) 28 July 2016 (2016-07-28) * claims 1-4; table 2 * ----- | 1-11 | INV. C04B7/26 C04B7/345 C04B7/43 C04B7/47 |

TECHNICAL FIELDS
SEARCHED     (IPC)

C04B

The present search report has been drawn up for all claims

| Place of search | Date of completion of the search | Examiner |
|---|---|---|
| Munich | 11 June 2019 | Roesky, Rainer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 3 670 467 A1**

**ANNEX TO THE EUROPEAN SEARCH REPORT
ON EUROPEAN PATENT APPLICATION NO.**

EP 18 30 6825

This annex lists the patent family members relating to the patent documents cited in  the above-mentioned European search report.
The members are as contained in the European Patent Office EDP file on
The European Patent Office is in no way liable for these particulars which are merely given for the purpose of information.

11-06-2019

| Patent document cited in search report | Publication date | Patent family member(s) | Publication date |
|---|---|---|---|
| WO 2016118030    A1 | 28-07-2016 | BR 112017015447  A2<br>CN    107207342  A<br>EP      3247684  A1<br>US    2017349485  A1<br>WO    2016118030  A1 | 16-01-2018<br>26-09-2017<br>29-11-2017<br>07-12-2017<br>28-07-2016 |

EPO FORM P0459

For more details about this annex : see Official Journal of the European Patent Office, No. 12/82

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20160031757 A